# EUROPEAN PATENT APPLICATION

(11) **EP 2 544 292 A1**
(43) Date of publication of application: **09.01.2013**
(21) Application number: 11750291.4
(22) Date of filing: 07.01.2011
(51) Int. Cl.: H01M 10/06, H01M 2/16, H01M 4/14, H01M 4/62, H01M 10/12

(54) **LEAD STORAGE BATTERY**

(30) Priority: 02.03.2010 JP 2010044854
(71) Applicant: Shin-Kobe Electric Machinery Co., Ltd., Tokyo 104-0044 (JP)
(72) Inventor: MINOURA, Satoshi, Tokyo 104-0044 (JP); SAKAI, Masanori, Tokyo 104-0044 (JP); KOBAYASHI, Shinsuke, Tokyo 104-0044 (JP); KOGURE, Koji, Tokyo 104-0044 (JP)
(74) Representative: Wilson Gunn
(86) International application number: PCT/JP2011/000058
(87) International publication number: WO 2011/108175

(57) **Abstract**

In a liquid-type lead acid storage battery in which charging is performed for a short time intermittently and high-rate discharging to load is performed in a partially charged state, there are used a positive electrode plate in which the utilization rate of a positive electrode activation substance is set to a range of 50% to 65%, and a negative electrode plate in which a carbonaceous electroconductive material and a bisphenol/aminobenzenesulfonic acid/formaldehyde condensate are added to the negative electrode activation substance, thereby improving the charge acceptance and the lifespan performance; and a separator whose surface disposed opposite the negative electrode plate is formed from a nonwoven fabric made of a material selected from glass, pulp, and polyolefin, is used as a separator; whereby the charge acceptance and the lifespan performance under PSOC are improved.

## Description

### TECHNICAL FIELD

The present invention relates to a liquid-type lead acid storage battery having, in a battery jar, free electrolyte that is not impregnated in an electrode plate group or a separator.

### BACKGROUND ART

Lead-acid batteries are characterized as being inexpensive and highly reliable. Therefore, they are widely used as an electrical power source for providing power for starting motor vehicles or providing power for golf carts and other electric vehicles, and as an electrical power source for an uninterruptable power supply and other industrial devices.

In recent years, a variety of measures to improve fuel efficiency have been considered in order to prevent atmospheric pollution and global warming. Examples of motor vehicles subjected to fuel-efficiency improvement measures that are being considered include idling stop vehicles ("ISS vehicles" hereafter) wherein the engine is stopped when the vehicle is not in motion and unnecessary idling of the engine is prevented, reducing the engine operation time; and electrical power generation control vehicles, in which an alternator is controlled in order to minimize load on engine and engine rotation is used to power the vehicle without wastage, and other micro-hybrid vehicles.

In an ISS vehicle, the number of engine startup cycles is higher, and the lead acid storage battery discharges a large electrical current during each startup. Also, in an ISS vehicle or an electrical power generation control vehicle, the amount of electricity generated by the alternator is smaller, and the lead acid storage battery is charged in an intermittent manner; therefore, charging of the battery is often insufficient. Therefore, a lead acid storage battery used in an ISS vehicle is required to have a capability in which the battery is charged as much as possible in a short time; in other words, to have a higher charge acceptance. In an electrical power generation control vehicle, controls are performed so that charging of the battery is stopped and engine load is reduced during startup acceleration or other times in which the engine load is high, or when the amount of battery charge has reached a specific level; the lead acid storage battery is rapidly charged in a short space of time and the amount of battery charge is recovered when the amount of battery charge becomes insufficient; and the battery is proactively charged using power generated by the alternator during deceleration or other times in which it is appropriate for the alternator to proactively place a load on the engine. Therefore, it is necessary to improve the charge acceptance of a lead acid storage battery used in an electrical power generation control vehicle.

A battery used as described above is used in a partially charged state known as a PSOC (i.e., partial state of charge). A lead acid storage battery has a tendency of having a shorter lifespan when used under PSOC than in an instance in which the battery is used in a fully charged state. The reason for the shorter lifespan under PSOC is thought to be that when the battery is repeatedly charged and recharged in an insufficiently charged state, lead sulfate created on a negative plate during discharge undergoes progressive coarsening and tends not to return to metallic lead, which is produced during charging. Therefore, in a lead acid storage battery used under PSOC, in order to increase the lifespan, it is again necessary to improve the charge acceptance (i.e., make it possible to charge the battery as much as possible in a short time), prevent the battery from being charged and recharged in an insufficiently charged state, and inhibit coarsening of lead sulfate due to repeated charging/discharging.

In a lead acid storage battery used under PSOC, charging opportunities are infrequent and the battery does not reach a fully charged state. Therefore, the electrolyte is less readily stirred in the battery jar due to generation of hydrogen gas. Therefore, in a lead acid storage battery of such type, high-concentration electrolyte accumulates in a lower part of the battery jar, and low-concentration electrolyte accumulates in an upper part of the battery jar, so that the electrolyte stratifies. If the electrolyte concentration is high, charge acceptance decreases further (i.e., a charge reaction takes place less readily), and the lifespan of the lead acid storage battery decreases even further.

Thus, in recent years, an extremely important challenge in relation to an automotive lead acid storage battery is to improve charge acceptance in order to make it possible to perform a high-rate discharge to load when a short period of charging has occurred and to improve the lifespan performance of the battery when used under PSOC.

In a lead acid storage battery, although the charge acceptance of a positive electrode activation substance is high, the charge acceptance of a negative electrode activation substance is poor. Therefore, in order to improve the charge acceptance of the lead acid storage battery, it is crucial to improve the charge acceptance of the negative electrode activation substance. Accordingly, efforts to improve the charge acceptance of the negative electrode activation substance alone have conventionally taken place. In Patent Reference 1 and Patent Reference 2, proposals have been made to increase the amount of carbonaceous electroconductive material added to the negative electrode activation substance to improve the charge acceptance and improve the lifespan of the lead acid storage battery under PSOC.

However, the proposals are intended for a sealed lead acid storage battery in which an electrolyte is impregnated into a separator called a retainer so that no free electrolyte is present in the battery jar, and are not intended for a liquid-type lead acid storage battery having within a battery jar free electrolyte that is not impregnated in a separator. Although it is also possible in a liquid-type lead acid storage battery to increase the amount of the carbonaceous electroconductive material added to the negative electrode activation substance, in a liquid-type lead acid storage battery, if the amount of the carbonaceous electroconductive material added to the negative electrode activation substance is increased excessively, the carbonaceous electroconductive material in the negative electrode activation substance leaks into the electrolyte, causes the electrolyte to become cloudy, and, in a worst-case, causes an internal short-circuit. Therefore, in a liquid-type lead acid storage battery, it is necessary to restrict the amount of carbonaceous electroconductive material added to the negative electrode activation substance, and there is a limit to the extent to which the charge acceptance of the entire lead acid storage battery can be improved by adding the carbonaceous electroconductive material to the negative electrode activation substance.

In a sealed lead acid storage battery, not only is the battery capacity low due to a restriction on the amount of electrolyte, but a phenomenon known as thermal runaway occurs in an instance in which the temperature during use is high. Therefore, it is necessary to avoid use in a high-temperature environment, such as in an engine compartment. Therefore, when a sealed lead acid storage battery is used in a motor vehicle, it is necessary to install the battery in a luggage compartment or a similar location. However, installing the battery in the luggage compartment or a similar location results in an increase in the amount of wire harness, and is not preferable. For an automotive lead acid storage battery, it is preferable to use a liquid-type lead acid storage battery, which is devoid of constraints such as those described above. Accordingly, there exists a pressing need to improve the charge acceptance of liquid-type lead-acid batteries.

Meanwhile, with regards to lead-acid batteries, an organic compound for acting to inhibit coarsening of the negative electrode activation substance is added to the negative electrode activation substance in order to inhibit coarsening thereof when charging/discharging is performed, inhibit a reduction in the surface area of the negative electrode, and maintain a state of high reactivity in relation to a charge/discharge reaction. Conventionally, lignin, which is a major component of wood, is used as the organic compound for inhibiting coarsening of the negative electrode activation substance. However, lignin has a large variety of structures in which a plurality of unit structures are joined in a complex manner, and normally has a carbonyl group or another portion that is readily oxidized or reduced. Therefore, when the lead acid storage battery is charged or discharged, this portion is oxidized or reduced, and broken down. Therefore, even when lignin is added to the negative electrode activation substance, it is not possible to maintain, over a long period of time, an effect of inhibiting a reduction in performance due to repeated charging and discharging. Also, lignin has a side effect of adsorbing lead ions that dissolve from lead sulfate during charging and reducing the reactivity of the lead ions, and therefore hindering the charge reaction of the negative electrode activation substance and inhibiting an improvement in the charge acceptance. Therefore, a problem is presented in that the lignin added to the negative electrode activation substance improves discharge characteristics but prevents the charge acceptance from improving.

In view of the above, proposals have been made to replace the lignin added to the negative electrode activation substance with sodium lignosulfonate, in which a sulfonic group is introduced in an α-position of a side chain of a phenylpropane structure, which is a basic structure of lignin; a bisphenol/aminobenzenesulfonic acid/formaldehyde condensate, or another substance.

For example, in Patent Reference 3 and Patent Reference 4, there are disclosed techniques in which a bisphenol/aminobenzenesulfonic acid/formaldehyde condensate, and a carbonaceous electroconductive material are added to the negative electrode activation substance. In particular, in Patent Reference 4, there is disclosed a technique in which a bisphenol/aminobenzenesulfonic acid/formaldehyde condensate is selected as an organic compound for inhibiting coarsening of lead sulfate when charging/discharging is performed, and an effect of inhibiting coarsening of lead sulfate is maintained; and a carbonaceous electroconductive material is added to improve charge acceptance. Also, in Patent Reference 5, there is disclosed [a technique in which] electroconductive carbon and activated carbon are added to the negative electrode activation substance and discharge characteristics under PSOC are improved.

### [Prior Art References]

### [Patent References]

[Patent Reference 1] JP-A 2003-36882
[Patent Reference 2] JP-A 07-201331
[Patent Reference 3] JP-A 11-250913
[Patent Reference 4] JP-A 2006-196191
[Patent Reference 5] JP-A 2003-051306

### DISCLOSURE OF THE INVENTION

### [Problems the Invention Is Intended to Solve]

As described above, in order to improve the charge acceptance and the lifespan characteristics under PSOC of a liquid-type lead acid storage battery, conventional proposals that have been made have focused solely on improving the performance of the negative electrode activation substance. However, there is a limit to the extent to which the charge acceptance and the lifespan characteristics under PSOC of a liquid-type lead acid storage battery can be improved merely by improving the charge acceptance and the lifespan performance of the negative electrode activation substance, and it is difficult to further improve the performance of the lead acid storage battery used under PSOC.

An object of the present invention is to improve, relative to a conventional lead acid storage battery, the lifespan performance under PSOC, and the charge acceptance of a liquid-type lead acid storage battery in which charging is performed for a short time intermittently and high-rate discharging to load is performed in a partially charged state.

### [Means for Solving These Problems]

The present invention relates to a liquid-type lead acid storage battery wherein an electrode plate group is accommodated together with an electrolyte in a battery jar; the electrode plate group being formed by layering a negative electrode plate comprising a negative electrode current collector filled with a negative electrode activation substance, and a positive electrode plate comprising a positive electrode current collector filled with a positive electrode activation substance, with a separator interposed therebetween; and wherein charging is performed intermittently and high-rate discharge to load is performed in a partially charged state.

In the present invention, at least a carbonaceous electroconductive material and an organic compound for acting to inhibit coarsening of the negative electrode activation substance due to repeated charging/discharging ("organic compound for inhibiting coarsening of the negative electrode activation substance" hereafter) are added to the negative electrode activation substance. Also, a positive electrode plate that is used has the utilization rate of the positive electrode activation substance in relation to a discharge reaction set to a range of 50% or above and 65% or below.

The inventors discovered that improving the utilization rate of the positive electrode activation substance in relation to the discharge reaction reduces the reaction overpotential in a charge reaction of the positive electrode activation substance, facilitates progress of the charge reaction, and improves the charge acceptance of the positive electrode activation substance. The inventors discovered that using the positive electrode activation substance (whose charge acceptance has been thus improved) with the negative electrode plate, in which at least the carbonaceous electroconductive material and the organic compound for inhibiting coarsening of the negative electrode activation substance have been added to the negative electrode activation substance to improve the charge acceptance and the lifespan performance ("negative electrode plate with improved performance" hereafter), makes it possible to improve the charge acceptance of the entire lead acid storage battery relative to that of a conventional lead acid storage battery, and to further improve the lifespan performance when used under PSOC.

In an instance in which the utilization rate of the positive electrode activation substance in relation to the discharge reaction is under 50%, it is not possible to obtain any significant effect of improving the charge acceptance of the entire lead acid storage battery. However, in an instance in which the utilization rate of the positive electrode activation substance is 50% or above, it is possible to obtain a significant effect of improving the entire lead acid storage battery. If the charge acceptance of the entire lead acid storage battery can be improved, it is possible to perform a high-rate discharge to load under PSOC (i.e., a partial state of charge) without incident; and to prevent coarsening of lead sulfate, which is a discharge product, due to repeated charging/discharging in an insufficiently charged state, therefore making it possible to improve the lifespan performance of the battery in an instance of use under PSOC.

If the positive electrode activation substance has an excessively high rate of utilization, the positive electrode activation substance becomes excessively porous, the structure of the activation substance breaks down due to repeated charging and discharging, and a phenomenon known as sludging occurs. Therefore, the lifespan performance of the positive electrode plate decreases, and it becomes impossible to obtain a lead acid storage battery that can withstand actual use. Therefore, it is not a simple case of a higher utilization rate of the positive electrode activation substance in relation to the discharge reaction being more preferable. Experiments revealed that although the charge acceptance and the lifespan performance of the battery are clearly improved when the utilization rate of the positive electrode activation substance is in a range of 50% to 65%, if the utilization rate of the positive electrode activation substance exceeds 65%, the charge acceptance and the lifespan performance of the battery will not continue to improve, and no significantly benefit will be realized by increasing the utilization rate of the positive electrode activation substance in relation to the discharge reaction to over 65%. Considering that an excessively large positive electrode activation substance utilization rate results in a risk of sludging occurring in the positive electrode activation substance, it is preferable to avoid a utilization rate of the positive electrode activation substance of over 65%. Therefore, an upper limit of the utilization rate of the positive electrode activation substance in relation to the discharge reaction is preferably 65%.

Specifically, a lead acid storage battery is assembled using a negative electrode plate, whose performance has been improved by adding to the negative electrode activation substance at least the carbonaceous electroconductive material and the organic compound for inhibiting coarsening of the negative electrode activation substance when charging/discharging is performed, and a positive electrode plate, in which the utilization rate of the positive electrode activation substance in relation to the discharge reaction is set within a range of 50% or above and 65% or below. It is thereby possible for the charge acceptance of the resulting lead acid storage battery to be even greater than that of a conventional lead acid storage battery whose charge acceptance has been increased solely by improving the performance of the negative electrode, and for the battery to perform a high-rate discharge to load under PSOC. It is also thereby possible to obtain a lead acid storage battery in which coarsening of lead sulfate, which is a discharge product, due to repeated charging/discharging in an insufficiently charged state, is inhibited, and the lifespan performance in an instance of use under PSOC is improved.

In the present invention, the carbonaceous electroconductive material added to the negative electrode activation substance in order to improve the charge acceptance of the negative electrode activation substance may be a carbon-based electroconductive material, and may be at least one material selected from a conventionally known group of carbonaceous electroconductive materials consisting of graphite, carbon black, activated carbon, carbon fiber, and carbon nanotubes.

The carbonaceous electroconductive material is preferably graphite, and further preferably, flake graphite. The particle diameter of flake graphite is preferably 100 µm or more.

Since the electrical resistance of flake graphite is one order of magnitude smaller than the electrical resistance of acetylene black or another carbon black, using flake graphite as the carbonaceous electroconductive material to be added to the negative electrode activation substance makes it possible to reduce the electrical resistance of the negative electrode activation substance and improve the charge acceptance.

The charge reaction of the negative electrode activation substance is dependent on the concentration of lead ions dissolving from lead sulfate, which is a discharge product, and the charge acceptance increases with increasing lead ion level. The carbonaceous electroconductive material added to the negative electrode activation substance has an action of finely dispersing lead sulfate that is created in the negative electrode activation substance during discharge. Repeating a charge/discharge cycle in an insufficiently charged state results in coarsening of lead sulfate, which is the discharge product; a decrease in the concentration of lead ions dissolving from lead sulfate; and a decrease in charge acceptance. However, when the carbonaceous electroconductive material is added to the negative electrode activation substance, it is possible to inhibit coarsening of lead sulfate, keep the lead sulfate in a fine state, and maintain a state in which the concentration of lead ions dissolving from lead sulfate is high. Therefore, it is possible to maintain a state of high negative electrode charge acceptance over a long period of time.

For the organic compound to be added to the negative electrode activation substance in order to inhibit coarsening of the negative electrode activation substance when charging/discharging is performed, it is preferable to use a compound whose principal component is a bisphenol/aminobenzenesulfonic acid/formaldehyde condensate.

In such an instance, for the bisphenol/aminobenzenesulfonic acid/formaldehyde condensate, experiments have confirmed that favourable results are obtained using a formaldehyde condensate of a bisphenol A aminobenzenesulfonic acid sodium salt, represented by a chemical structural formula shown in Chemical Formula 1 below.

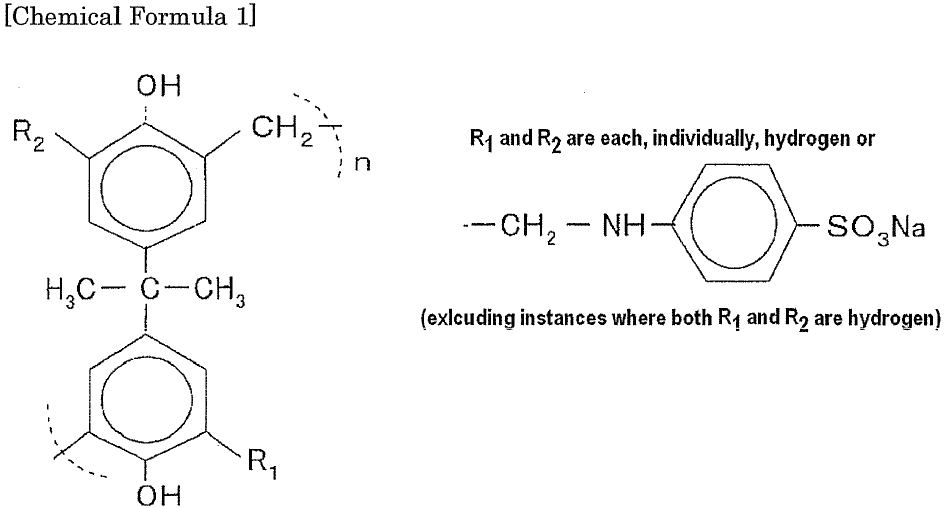

As with lignin, the bisphenol/aminobenzenesulfonic acid/formaldehyde condensate acts to inhibit coarsening of the negative electrode activation substance and does not have a portion that is readily oxidized or reduced when the lead acid storage battery is charged/discharged. Therefore, adding the condensate to the negative electrode activation substance makes it possible to maintain the effect of preventing coarsening of the negative electrode activation substance due to charging/discharging. Also, although lignin has a side effect of adsorbing lead ions that dissolve from lead sulfate during charging and reducing the reactivity of the lead ions, therefore hindering the charge reaction of the negative electrode activation substance and inhibiting an improvement in the charge acceptance, the condensate adsorbs the lead ions in a smaller amount, and therefore has a smaller side effect than lignin in terms of hindering the charging reaction. Therefore, adding the bisphenol/aminobenzenesulfonic acid/formaldehyde condensate with the carbonaceous electroconductive material to the negative electrode activation substance makes it possible to maintain an improved charge acceptance of the negative electrode activation substance, inhibit a reduction in charge/discharge reactivity due to repeated charging/discharging, and improve the lifespan performance and the charge acceptance of the negative electrode plate.

In an instance in which an organic compound whose principal component is the bisphenol/aminobenzenesulfonic acid/formaldehyde condensate is used as the organic compound for inhibiting coarsening of the negative electrode activation substance when charging/discharging is performed; and at least one material selected from a group of materials consisting of graphite, carbon black, activated carbon, carbon fiber, and carbon black is used as the carbonaceous electroconductive material, it is preferable that, of two surfaces in a thickness direction of the separator, a surface disposed opposite a surface of the negative electrode plate comprises a nonwoven fabric formed from a fiber of at least one material selected from a group of materials consisting of glass, pulp, and polyolefin.

Experiments have confirmed that in an instance in which a separator configured as above is used, particularly preferable results can be obtained when the activation substance utilization rate of the positive electrode plate in relation to the discharge reaction is in a range of 55% or above and 65% or below.

The present invention is one in which the positive electrode plate, in which the utilization rate of the positive electrode activation substance in relation to the discharge reaction has been set within a suitable range, is used in combination with a negative electrode plate, in which the performance (charge acceptance and lifespan performance) has been improved, thereby making it possible to obtain a significant effect of improving the lifespan performance when used under PSOC, and the charge acceptance, of the lead acid storage battery. For the negative electrode plate, it is preferable to use one in which the charge acceptance and the lifespan performance is as high as possible. In the present invention, no particular stipulation is made in regard to the amount of the carbonaceous electroconductive material added to the negative electrode activation substance to improve the charge acceptance of the negative electrode plate, or the amount of the organic compound added to the negative electrode activation substance in order to inhibit coarsening of the negative electrode activation substance due to charging/discharging. However, it shall be apparent that, in carrying out the invention, the amount of each of the additives is set so as to maximize the performance of the negative electrode plate.

### [Effect of the invention]

According to the present invention, the positive electrode plate, in which the utilization rate of the positive electrode activation substance in relation to the discharge reaction has been set to 50% or above and 65% or below and the charge acceptance has been improved; is used in combination with a negative electrode plate, in which the carbonaceous electroconductive material and the organic compound for inhibiting coarsening of the negative electrode activation substance have been added to the negative electrode activation substance, and the charge acceptance and the lifespan performance have been improved. The charge acceptance of the entire lead acid storage battery can thereby be improved in comparison to a conventional lead acid storage battery whose charge acceptance has been increased solely by improving the performance of the negative electrode. Therefore, not only is it possible to perform high-rate discharge to load under PSOC, it is also possible to inhibit coarsening of lead sulfate caused by repeated charging/discharging in an insufficiently charged state, and to improve the lifespan performance when used under PSOC.

In particular, according to the present invention, in an instance in which a compound whose principal component is a bisphenol/aminobenzenesulfonic acid/formaldehyde condensate, which has a reduced side effect of hindering the charging reaction, is used as the organic compound that is added to the negative electrode activation substance in order to inhibit coarsening of the negative electrode activation substance when charging/discharging is performed, it is possible to dramatically improve the charge acceptance and the lifespan performance of the lead acid storage battery.

### BRIEF DESCRIPTION OF THE DRAWINGS

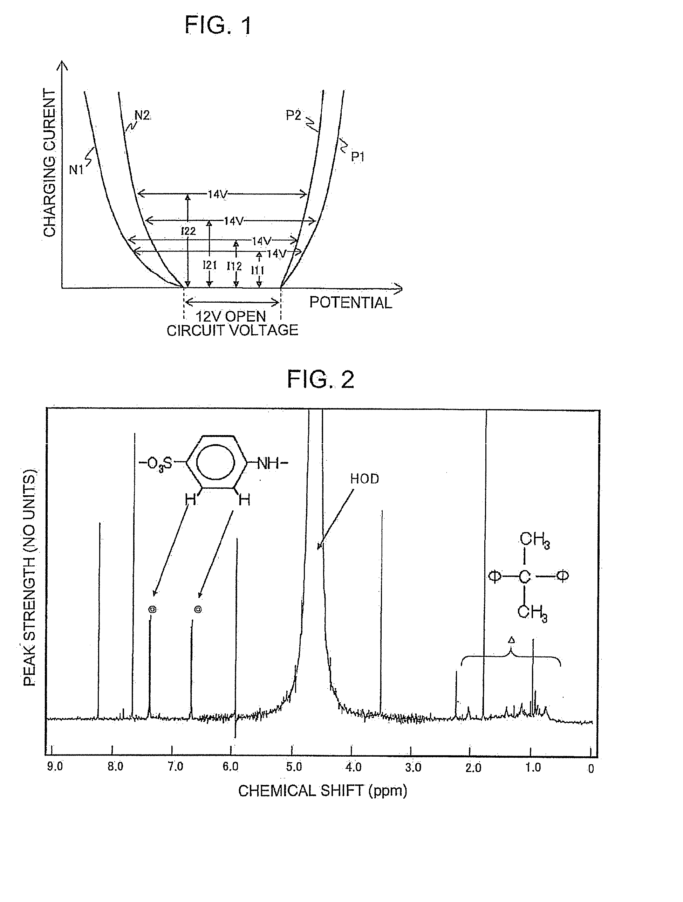

FIG. 1 is a diagram showing a relationship between a charging current and an electrical potential of the negative electrode plate and the positive electrode plate in an instance in which an automotive lead acid storage battery having an open circuit voltage of 12 V is charged using a constant charging voltage of 14 V; and
FIG. 2 is a spectrum diagram showing a result in which the formaldehyde condensate of bisphenol A aminobenzenesulfonic acid sodium salt added to the negative electrode is extracted from the negative electrode plate after chemical conversion, and a spectrum measured using NMR spectroscopy.

### BEST MODE FOR CARRYING OUT THE INVENTION

The lead acid storage battery according to the present invention is a liquid-type lead acid storage battery suitable for use in, e.g., an ISS vehicle, electrical power generation control vehicle, or another micro-hybrid vehicle; the lead acid storage battery being charged intermittently and made to perform a high-rate discharge to load under PSOC. The lead acid storage battery according to the present invention has a configuration in which an electrode plate group is accommodated with an electrolyte in a battery jar; the electrode plate group being formed by layering a negative electrode plate comprising a negative electrode current collector filled with a negative electrode activation substance, and a positive electrode plate comprising a positive electrode current collector filled with a positive electrode activation substance, with a separator interposed between the positive electrode plate and the negative electrode plate. A basic configuration of such description is similar to that of conventional lead-acid batteries.

Conventionally, in order to improve the charge acceptance in lead-acid batteries, efforts have been made solely to improve the charge acceptance of the negative electrode. However, in the present invention, the charge acceptance of the positive electrode is improved along with that of the negative electrode, and the negative electrode plate with improved charge acceptance is used in combination with the positive electrode plate with improved charge acceptance. The charge acceptance of the lead acid storage battery is thereby further improved, coarsening of lead sulfate due to repeated charging/discharging in an insufficiently charged state is inhibited, and the lifespan performance is further improved. A description will now be given for the basic technical concept of the present invention before an embodiment of the present invention is described.

As a result of analyzing a relationship between a change in potential of the positive electrode plate and the charging current and a relationship between a change in potential of the negative electrode plate and the charging current when charging is performed, the inventors of the present invention discovered that improving the charge acceptance of the positive electrode plate in an instance in which the negative electrode plate with reduced reaction overpotential and improved charge acceptance is used dramatically improves the charge acceptance of the entire lead acid storage battery compared to a conventional lead acid storage battery in which only the charge acceptance of the negative electrode plate has been improved. Improving the charge acceptance makes it possible not only to perform high-rate discharge to load under PSOC without hindrance, but also to prevent coarsening of the lead sulfate due to repeated charging/discharging in an insufficiently charged state, and to improve the lifespan performance.

FIG. 1 is a diagram showing a relationship between a charging current and an electrical potential of the negative electrode plate and the positive electrode plate in an instance in which an automotive lead acid storage battery having an open circuit voltage of 12 V is charged using a constant charging voltage of 14 V. In FIG. 1, the vertical axis represents charging current, and the horizontal axis represents the potential (vs. SHE) of the positive electrode plate and the negative electrode plate measured using a standard hydrogen electrode as a reference. In the drawing, N1 and N2 represent charging current-potential curves of the negative electrode plate, and P1 and P2 represent charging current-potential curves of the positive electrode plate. Although the charging current-potential curves of the negative electrode plate should be shown in the third quadrant in a rectangular coordinate system, in FIG. 1, the polarity of each of the potential and current is reversed for the charging current-potential curves of the negative electrode plate, and the charging current-potential curves of the negative electrode plate are shown together with the charging current-potential curves of the positive electrode plate in the first quadrant, for purposes of facilitating a description.

In FIG. 1, N1 represents a charging current-potential curve in an instance in which the overpotential of a charging reaction performed at the negative electrode plate is higher than in an instance represented by N2. In an instance in which the overpotential of the charging reaction is high, the charging current-potential curve of the negative electrode plate has a shape that bulges significantly outwards as shown by N1 in the diagram, but in an instance in which the overpotential is low, the curve is more upright than that represented by N1, as represented by N2.

P1 represents a charging current-potential curve in an instance in which the overpotential of the charging reaction performed at the positive electrode plate is lower than that represented by P2. The charging current-potential curve P1 in an instance in which the overpotential is high has a shape that bulges outwards compared to the charging current-potential curve P1 in an instance in which the overpotential is low. In an instance in which the overpotential is low, the curve is more upright than that represented by P1.

The overpotential η of the charging reaction is the degree of change in potential generated at each of the electrodes when a charging voltage is applied when an open-circuit state is present. The overpotential η is represented by the absolute value of a difference between the potential at each of the electrodes and an equilibrium potential (open circuit voltage) when the charging voltage is applied; i.e., η = | electrode potential - equilibrium potential when charging voltage is applied |.

A charging current-potential curve of a negative electrode plate to which no specific measures have been taken to improve the charge acceptance of the negative electrode activation substance has an outwardly bulging shape as shown by N1 in FIG. 1. However, a charging current-potential curve of a negative electrode plate in which the carbonaceous electroconductive material and the organic compound for inhibiting coarsening of the negative electrode activation substance when charging/discharging is performed have been added to the negative electrode activation substance, and the charge acceptance has been improved, has an upright shape as shown by N2.

The charging current-potential curve of a positive electrode plate in which no specific measures have been taken to improve the charge acceptance of the positive electrode activation substance has a shape as shown by P1 in FIG. 1. P1 is a charging current-potential curve of a positive electrode plate used is a conventional lead acid storage battery, and is a curve that is more upright than N1. This means that in a lead acid storage battery, the charge acceptance of the negative electrode plate is inherently lower and the charge acceptance of the positive electrode plate is inherently higher. In an instance in which the overpotential of the charging reaction of the positive electrode activation substance is reduced and the charge acceptance of the positive electrode plate is improved, the charging current-potential curve of the positive electrode plate has a shape that is more upright than P1, as shown by P2 in FIG. 1.

If it is assumed that a lead acid storage battery has been assembled using a negative electrode plate and a positive electrode plate whose respective charging current-potential characteristic curve is N1 and P1, the charging current that is generated when a charging voltage of 14 V is applied from a state of open-circuit voltage (12 V) is represented by I11. The open-circuit voltage is a difference between the positive electrode potential and the negative electrode potential, and the 14 V that is applied is also a difference in potential between the two electrodes.

Next, if it is assumed that a lead acid storage battery has been configured by combining a negative electrode plate in which the overpotential of the charging reaction has been reduced so that the charging current-potential characteristics curve is represented by N2, and the charge acceptance has been improved; with a positive electrode plate whose charging current-potential curve is represented by P1, the charging current generated when a 14-V charging voltage is applied is represented by I21( which is larger than I11). It accordingly follows that even if the charging current-potential curve of the positive electrode plate remains unchanged at P1 (i.e., even if the performance of the positive electrode plate is not specifically improved), the charging current can be dramatically increased. Specifically, improving the charge acceptance of the negative electrode activation substance so that the charging current-potential characteristics curve is represented by N2 makes it possible to dramatically improve the charge acceptance of the entire lead acid storage battery even if the charge acceptance of the positive electrode plate is not specifically improved.

Next, if it is assumed that a lead acid storage battery has been assembled by combining a positive electrode plate in which the reaction overpotential has been reduced so that the charging current-potential curve is represented by P2 with a negative electrode plate whose charging current-potential curve is represented by N1, the charging current that is generated when a 14-V charging voltage is applied is represented by I12 (which is larger than I11), and the charge acceptance can be improved relative to an instance in which a positive electrode plate whose charging current-potential curve is represented by P1 and a negative electrode plate whose charging current-potential curve is represented by N1 are used. However, the extent of improvement in the charge acceptance is smaller than that in an instance in which a positive electrode plate whose charging current-potential curve is represented by P1 is combined with a negative electrode plate whose charging current-potential curve is represented by N1.

However, when a lead acid storage battery is assembled by combining a negative electrode plate in which overpotential has been reduced so that the charging current-potential curve is represented by N2 (i.e., in which the charge acceptance has been improved) with a positive electrode plate in which overpotential has been reduced so that the charging current-potential curve is represented by P2 (i.e., in which the charge acceptance has been improved), the charging current generated when a 14-V charging voltage is applied can be increased to I22 (which is larger than I11), and the charge acceptance of the entire lead acid storage battery can be dramatically improved compared to an instance in which only the charge acceptance of the negative electrode plate has been improved.

The inventors of the present invention focused on [a fact] that, as described above, if the charge acceptance of the positive electrode plate can be improved, combining the positive electrode plate with a negative electrode plate whose charge acceptance has been improved may dramatically improve the charge acceptance of the entire lead acid storage battery compared to a conventional lead acid storage battery in which only the charge acceptance of the negative electrode plate has been improved.

A variety of means for improving the charge acceptance of the positive electrode plate were examined, and experiments were performed. As a result, it was found that improving the utilization rate of the positive electrode activation substance makes it possible to improve the charge acceptance of the positive electrode plate so that the charging current-potential curve is an upright curve as represented by P2 in FIG. 1. Also, it was found that assembling a lead acid storage battery by combining a negative electrode plate in which the carbonaceous electroconductive material and the organic compound that has an action of inhibiting coarsening of the negative electrode activation substance when charging/discharging is performed have been added to the negative electrode activation substance, and the charge acceptance and the lifespan performance have been improved; and a positive electrode plate in which the positive electrode activation substance utilization rate is set within a range of 50% to 65%, thereby improving the charge acceptance, makes it possible to dramatically improve the charge acceptance of the entire lead acid storage battery and further improve the lifespan performance when used under PSOC, compared to a conventional lead acid storage battery in which only the charge acceptance of the negative electrode plate has been improved to improve the charge acceptance of the entire battery.

In the present specification, the utilization rate of the positive electrode activation substance in relation to the discharge reaction is defined as follows. Specifically, a liquid-type lead acid storage battery, in which a theoretical capacity of the negative electrode activation substance is sufficiently larger than a theoretical capacity of the positive electrode activation substance, is assembled using a positive electrode plate whose activation substance utilization rate is to be determined. The lead acid storage battery is placed in a fully charged state, then subjected to a positive- electrode-governed discharge experiment in which the battery is allowed to discharge at a current of 0.2 C in relation to the rated capacity, wherein the discharge terminates when the positive electrode activation substance is depleted and a state is reached in which the discharge reaction is no longer possible before the negative electrode activation substance is depleted. The positive electrode activation substance utilization rate in this discharge experiment is defined as a ratio between the quantity of electricity discharged until the discharge is terminated and a theoretical discharge capacity of the positive electrode activation substance of the positive electrode plate.

Specifically, an experimental lead acid storage battery is configured, wherein an electrode plate group comprising one positive electrode plate and two negative electrode plates, in which a negative electrode plate is arranged on each of both sides of a positive electrode plate with a separator interposed therebetween, is accommodated in a battery jar; and an electrolyte (dilute sulfuric acid with a specific weight of 1.28) having a theoretical capacity volume equal to or greater than 1.5 times the theoretical capacity of the positive electrode activation substance is poured into the battery jar. A discharge experiment, in which the lead acid storage battery is discharged at a current of 0.2 C in relation to the rated capacity, was performed. When configuring the experimental lead acid storage battery, the negative electrode plate used is one in which the theoretical capacity of the negative electrode activation substance is equal to or higher than 1.5 times the theoretical capacity of the positive electrode activation substance. The theoretical capacity of the electrolyte capacity and the theoretical capacity of the negative electrode activation substance is equal to or higher than 1.5 times the theoretical capacity of the positive electrode activation substance so that the discharge reaction reliably terminates in a positive electrode-governed manner.

A high utilization rate of the positive electrode activation substance in relation to the discharge reaction indicates that it is possible to maintain, over a long period of time, a state in which diffusion movement of hydrogen ions (H⁺) and sulfate ions (SO₄²⁻), which are reactive species of the discharge reaction, takes place quickly; and to maintain the discharge reaction over a long period of time. The fact that the diffusion of the reactive species is maintained over a long period of time indicates a presence of a large number of reactive species diffusion paths.

Meanwhile, in a charging reaction, diffusion paths of hydrogen ions and sulfate ions generated during the progression of the charging reaction are necessary. If the utilization rate of the positive electrode activation substance in relation to the discharge reaction is high, it is possible to increase the number of diffusion paths of hydrogen ions and sulfate ions that are produced during the charging reaction, and to cause the produced substances to diffuse quickly without accumulating on the electrode plate reaction surface; thereby making it possible to allow the charging reaction to be performed across the entirety of the electrode plates in a smooth manner, facilitating the progress of the charging reaction, and improving the charge acceptance of the positive electrode plate.

In the present invention, in order to improve the performance of the negative electrode plate, at least the carbonaceous electroconductive material and the organic compound for inhibiting coarsening of the negative electrode activation substance when charging/discharging is performed are added to the negative electrode activation substance.

The carbonaceous electroconductive material is preferably selected from a group of materials consisting of graphite, carbon black, activated carbon, carbon fibers, and carbon nanotubes. The amount of carbonaceous electroconductive material added is preferably within a range of 0.1 to 0.3 mass parts relative to 100 mass parts of the negative electrode activation substance in a fully charged state (i.e., sponge-like metallic lead). Preferably, graphite is selected; and further preferably, flake graphite is selected. The average primary particle diameter of the flake graphite is preferably 100 µm or above.

Flake graphite described here refers to that listed in JISM 8601(2005). The electrical resistivity of the flake graphite is 0.02 Ω•cm or less, and is one order of magnitude smaller than that of acetylene black or another carbon black, which is around 0.1 Ω•cm. Therefore, using the flake graphite instead of the carbon black used in a conventional lead acid storage battery makes it possible to reduce the electrical resistance of the negative electrode activation substance and improve the charge acceptance performance.

The average primary particle diameter of the flake graphite is obtained in accordance with a laser diffraction/scattering method listed in JISM 8511(2005). To obtain the average primary particle diameter of flake graphite, a laser diffraction/scattering particle distribution measuring device (e.g., Microtrack 9220FRA; Nikkiso Co., Ltd) is used. Using an aqueous solution containing 0.5vol% of a commercially available surfactant, polyoxyethylene octyl phenyl ether (e.g., Triton X-100; Roche Diagnostics), an appropriate amount of flake graphite test specimen is introduced into the aqueous solution and irradiated with ultrasound at 40 W for 180 seconds while being stirred; then, the average particle diameter is measured. The value of the average particle diameter obtained (median diameter: D50) is considered to be the average primary particle diameter.

A lead acid storage battery installed in an ISS vehicle, an electrical power generation control vehicle, or another micro-hybrid vehicle, is used in a partially charged state known as PSOC. In a lead acid storage battery used under such circumstances, a phenomenon known as sulfation, in which lead sulfate, which is an insulator produced in the negative electrode activation substance during discharge, undergoes coarsening, occurs at an early stage. When sulfation occurs, the charge acceptance and the discharge performance of the negative electrode activation substance decreases dramatically.

The carbonaceous electroconductive material added to the negative electrode activation substance acts to inhibit coarsening of lead sulfate, keep lead sulfate in a fine state, inhibit the concentration of lead ions that dissolve from lead sulfate, and maintain a state in which the charge acceptance is high.

Also, when the organic compound for inhibiting coarsening of the negative electrode activation substance due to charging/discharging is added to the negative electrode activation substance, optimizing the amount in which the organic compound is added makes it possible to obtain a negative electrode plate in which the charge/discharge reactivity is maintained over a long period of time and in which a state of high charge acceptance can be maintained over a long period of time.

Although it is possible to improve the charge acceptance of the entire battery merely by adding the carbonaceous electroconductive material and the organic compound for inhibiting coarsening of the negative electrode activation substance to the negative electrode activation substance and improving the performance of the negative electrode plate as described above, combining the negative electrode plate with the positive electrode plate described above makes it possible to further increase the charge acceptance of the entire battery.

It is preferable that a bisphenol/aminobenzenesulfonic acid/formaldehyde condensate is used as the organic compound for inhibiting coarsening of the negative electrode activation substance. The bisphenol is, for example, bisphenol A, bisphenol F, or bisphenol S. Of the condensate mentioned above, bisphenol A/aminobenzenesulfonic acid/formaldehyde condensate, represented by a chemical formula shown in Chemical Formula 1 below, is particularly preferable.

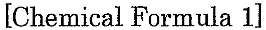

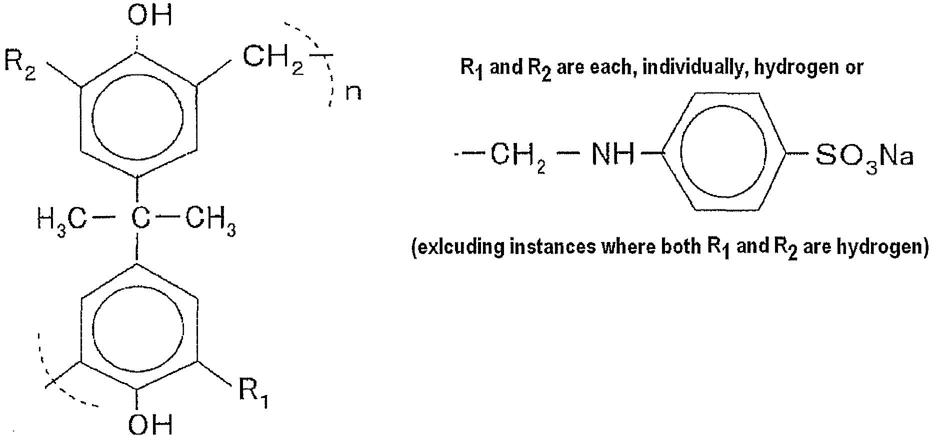

As described above, the charging reaction of the negative electrode activation substance is dependent on the concentration of lead ions dissolving from the lead sulfate, which is a charge product, and the charge acceptance is higher with a higher concentration of lead ions. Lignin, which is widely used as an organic compound added to the negative electrode activation substance to inhibit coarsening of the negative electrode activation substance during charging/discharging, has a side effect of adsorbing lead ions and reducing their reactivity, and therefore hindering the charging reaction of the negative electrode activation substance and inhibiting an increase in the charge acceptance. In contrast, with the bisphenol/aminobenzenesulfonic acid/formaldehyde condensate having the chemical formula represented by Chemical Formula 1 shown above, adsorptivity with respect to lead ions is lower, and the amount of adsorption is also lower. Therefore, using the condensate instead of lignin reduces the extent by which the charge acceptance is hindered, and reduces the likelihood that the charge acceptance will not be maintained by addition of the carbonaceous electroconductive material.

The present invention does not prevent selection of sodium ligninsulfonate, represented by a chemical formula shown in Chemical Formula 2 (partial configuration) below, or a similar compound, as the organic compound for inhibiting coarsening of the negative electrode activation substance during charge/discharge. Sodium ligninsulfonate is widely used as an organic compound for inhibiting coarsening of a negative electrode activation substance. However, sodium ligninsulfonate has a disadvantage of having a strong adsorptivity with respect to lead ions and having a strong side effect of inhibiting the charging reaction. In contrast, with the bisphenol/aminobenzenesulfonic acid/formaldehyde condensate, adsorptivity with respect to lead ions is lower, and the amount of adsorption with respect to lead ions is also lower. Therefore, the condensate rarely hinders the charging reaction, and does not hinder charge acceptance.

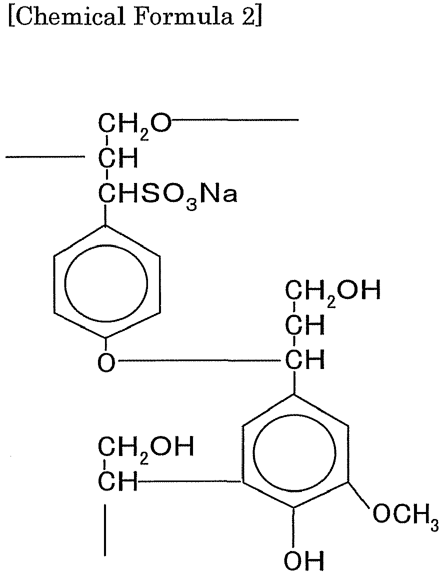

When the present invention is implemented, a common polyethylene separator formed from a microporous polyethylene sheet can be used as the separator. In such an instance, although a polyethylene separator may be used on its own, it is preferable to use a separator formed from a nonwoven fabric made of glass fiber, polyolefin (polyethylene, polypropylene, or the like) fiber, or a fiber made from pulp or another material ("separator formed from a nonwoven fabric" hereafter) together with a polyethylene separator, rather than using a polyethylene separator on its own. In an instance in which a separator formed from a nonwoven fabric and a polyethylene separator are used together, the polyethylene separator and the separator formed from a nonwoven fabric are caused to overlap each other for use so that a surface disposed opposite the negative electrode plate of the separator is formed by the separator formed from a nonwoven fabric. The separator formed from a nonwoven fabric can contain an appropriate amount of silica or another inorganic powder. The nonwoven fabric can be manufactured by dispersing fiber in water and forming a web from the fiber. Therefore, by dispersing the inorganic powder together with the fiber in water when the nonwoven fabric is obtained, the nonwoven fabric can be readily made to contain the inorganic powder. [Example of] a nonwoven fabric formed from a mixture of a plurality of [types of] fiber that can be preferably used include a nonwoven fabric obtained from a mixture of glass fiber and an acid-resistant organic resin fiber, rather than dipped using glass fiber on its own, such as, e.g., a nonwoven fabric forming a thin-type separator used in a control valve-type lead acid storage battery disclosed in JP-A 2002-260714; and a nonwoven fabric obtained from a mixture in which silica is further added as required to glass fiber and an acid-resistant organic resin fiber.

Sulfate ions produced from lead sulfate during charging travels downwards along a surface of the electrode plates. Under PSOC, since the battery does not reach a fully charged state, mixing of the electrolyte due to generation of gas does not occur. As a result, a process known as stratification occurs, wherein the electrolyte concentration becomes non-uniform, the specific gravity of the electrolyte at a lower part of the battery increasing and the specific gravity of the electrolyte at an upper part decreasing. When a phenomenon of such description occurs, the reaction area decreases, and the charge acceptance and the discharge performance therefore decrease. Providing a high-porosity separator formed from a nonwoven fabric opposite the surface of the negative electrode plate makes it possible to prevent the sulfate ions from migrating downwards, therefore making it possible to prevent stratification from occurring. Although merely using a separator of such description makes it possible to improve the charge acceptance of the entire battery, combining a separator of such description with the positive electrode plate described above makes it possible to further improve the charge acceptance of the entire battery. Also, using the separator in combination with the positive electrode plate and the negative electrode plate described above makes it possible to dramatically improve the charge acceptance of the entire lead acid storage battery.

### [Embodiment]

First, non-chemically converted positive electrode plates were created. In order to create the positive electrode plates, water was added to a mixture of lead oxide, lead tetroxide, and cut fiber (i.e., polyethylene terephthalate short fiber; same hereafter) and the mixture was kneaded. Then, the mixture was kneaded while small quantities of dilute sulfuric acid were gradually added, and a positive electrode activation substance paste was produced. The activation substance paste was charged into an expanded current collector created by expanding a rolled sheet formed from a lead alloy, and aged for 24 hours in an ambient [temperature of] 40°C and humidity of 95%. Then, the positive electrode activation substance charged into the current collector was dried, and a non-chemically converted positive electrode plate was created.

Positive electrode plates having positive electrode activation substances with differing utilization rates in relation to the discharge reaction were created as follows. Specifically, as the amount of added dilute sulfuric acid during preparation of the positive electrode activation substance paste increases, the porosity of the activation substance increases, and the utilization rate of the positive electrode activation substance in relation to the discharge reaction increases. Therefore, non-chemically converted positive electrode plates were created while appropriately changing the addition amount of sulfuric acid, whereby positive electrode plates, each having different activation substance utilization rates in relation to the discharge reaction, were obtained.

Next, non-chemically converted negative electrode plates were created. In order to create the negative electrode plates, water was added to a mixture of lead oxide, barium sulfate, the carbonaceous electroconductive material, and the organic compound having an action of inhibiting coarsening of the negative electrode activation substance; and the mixture was kneaded. Then, the mixture was kneaded while small quantities of dilute sulfuric acid were gradually added, and a negative electrode activation substance paste was produced. The activation substance paste was charged into an expanded current collector created by expanding a rolled sheet formed from a lead alloy, and aged for 24 hours in an atmosphere of [temperature of] 40°C and humidity of 95%. Then, the negative electrode activation substance was dried, and a non-chemically converted negative electrode plate was created. Here, the organic compound for inhibiting coarsening of the negative electrode activation substance, and the carbonaceous electroconductive material, were varied, and the negative electrode plates A, B, C, B' shown below were created.

### Negative electrode plate A:

In the negative electrode plate A, for the organic compound for inhibiting coarsening of the negative electrode activation substance, a compound whose principal component is sodium ligninsulfonate represented by the chemical formula shown above in Chemical Formula 2 was selected; and for the carbonaceous electroconductive material, carbon black (specific surface area 260 m²/g) whose ingredient is heavy oil was used, wherein the amount of carbon black added to the negative electrode activation substance was 0.2 mass parts per 100 mass parts of the activation substance.

### Negative electrode plate B:

In the negative electrode plate B, for the organic compound for inhibiting coarsening of the negative electrode activation substance, a compound whose principal component is bisphenol A/aminobenzenesulfonic acid/formaldehyde condensate represented by the chemical formula shown in Chemical Formula 1 (molecular weight: 170,000 to 200,000; sulfur content of compound: 6 to 11 mass percent) was selected; and for the carbonaceous electroconductive material, the carbon black described above was used, wherein the amount of carbon black added to the negative electrode activation substance was 0.2 mass parts per 100 mass parts of the activation substance.

### Negative electrode plate C:

In the negative electrode plate C, for the organic compound for inhibiting coarsening of the negative electrode activation substance, a compound whose principal component is bisphenol A/aminobenzenesulfonic acid/formaldehyde condensate represented by the chemical formula shown in Chemical Formula 1 (molecular weight: 170,000 to 200,000; sulfur content of compound: 6 to 11 mass percent) was selected; and for the carbonaceous electroconductive material, flake graphite (with a particle diameter of 180 µm) was used, wherein the amount of flake graphite added to the negative electrode activation substance was 2 mass parts per 100 mass parts of the activation substance.

### Negative electrode plate B':

In the negative electrode plate B', for the organic compound for inhibiting coarsening of the negative electrode activation substance, a compound whose principal component is bisphenol A/aminobenzenesulfonic acid/formaldehyde condensate represented by the chemical formula shown in Chemical Formula 1 (molecular weight: 170,000 to 200,000; sulfur content of compound: 6 to 11 mass percent) was selected; and no carbonaceous electroconductive material was added to the negative electrode activation substance.

Next, the negative electrode plates A, B, C, and B'; the positive electrode plates in which the utilization rate of the positive electrode activation substance in relation to the discharge reaction has been respectively varied; and two types of separators were combined, and lead-acid batteries were assembled. In assembling each of the batteries, the positive electrode plates and the negative electrode plates were alternately layered with a separator interposed therebetween; an electrode plate group comprising six positive electrode plates and seven negative electrode plates was configured; respective lugs of homopolar electrodes were welded using the cast-on-strap (COS) method; and the electrode plate group was manufactured. The assembled lead-acid batteries have a size D23 as designated in the JIS specifications.

Two types of separators were readied; a separator P formed only from a polyethylene separator, and a separator Q in which at least a surface disposed opposite the surface of the negative electrode plate is formed from a nonwoven fabric. The separator Q used in the present embodiment has a configuration in which a nonwoven fabric formed from glass fiber is overlappingly arranged on one surface of a polyethylene separator, and is arranged so that the nonwoven fabric is disposed opposite the surface of the negative electrode plate when the electrode plate group is configured.

Although in the present embodiment, a glass fiber nonwoven fabric was used as the nonwoven fabric forming the separator Q, the nonwoven fabric forming the separator Q is not limited to a glass fiber nonwoven fabric. A nonwoven fabric formed from fiber made of a polyolefin-based material or pulp or a similar material may be used instead of a glass fiber nonwoven fabric; alternatively, a nonwoven fabric formed from a mixture of fibers made of a plurality of the materials listed above may be used.

Also, although in the present embodiment, the separator Q was formed by overlapping a polyethylene separator with a glass fiber nonwoven fabric, the separator Q need only have a surface disposed opposite the negative electrode plate formed from a nonwoven fabric formed from fiber made of glass, polyolefin, pulp, or a similar material. The separator Q may also be formed from a nonwoven fabric made of a glass fiber or a similar fiber only.

Next, chemical conversion was performed for the battery jar. Dilute sulfuric acid having a specific gravity of 1.24 was poured into the battery jar; the battery was charged with a quantity of electricity [equivalent to] 200% of a theoretical capacity based on the amount of activation substance; and the lead acid storage battery was completed.

An experiment was performed in which nuclear magnetic resonance ("NMR" hereafter) spectroscopy was used to confirm that the bisphenol A/aminobenzenesulfonic acid/formaldehyde condensate represented by the chemical formula shown in Chemical Formula 1 is present in the negative electrode activation substance. In this experiment, an analysis was performed as described below using an NMR spectroscopy device (ECA-500FT-NMR; JEOL Limited).

First, the lead acid storage battery according to the first embodiment after chemical conversion has been performed was disassembled, the negative electrode plates were removed, and the removed negative electrode plates were washed with water to remove the sulfuric acid. The negative electrode activation substance after chemical conversion is porous metallic lead. In order to prevent oxidization of the negative electrode activation substance, the negative electrode plates were dried in nitrogen or another inert gas. The negative electrode activation substance is separated from the dried negative electrode plates, crushed, and introduced into a 10% sodium hydroxide solution. An extraction liquid, from which any resulting precipitate (lead hydroxide) has been removed, was analyzed and measured using the spectroscopy device described above. The measurement conditions are listed as follows in Table 1.

**[Table 1]**

| Measured nuclide | ¹H |
|---|---|
| Magnetic field strength | 11.747T (500 MHz for ¹H nuclide) |
| Observation range | -3ppm to -15ppm |
| Number of data points | 16384 points |
| Measurement mode | Non-decoupling method |
| Pulse waiting time | 7 Seconds |
| Number of integrations | 128 |
| Measurement solvent | Heavy water |
| Measurement temperature | Room temperature |

FIG. 2 shows a spectrum measured using NMR spectroscopy. In FIG. 2, the horizontal axis represents chemical shift (ppm), and the vertical axis represents peak intensity. As indicated by double circles at chemical shifts of 6.7 ppm and 7.5 ppm, peaks that originate from [the presence of] a p-aminobenzenesulfonic acid group in the formaldehyde condensate of bisphenol A aminobenzenesulfonic acid sodium salt represented by the chemical formula shown in Chemical Formula 1 were identified. Also, as indicated by a triangular symbol at a region corresponding to a chemical shift of 0.5 ppm to 2.5 ppm, a peak that originates from [the presence of] a bisphenol A skeleton in the bisphenol A/aminobenzenesulfonic acid/formaldehyde condensate represented by the chemical formula shown in Chemical Formula 1 was identified. The above results confirmed the presence of the bisphenol A/aminobenzenesulfonic acid/formaldehyde condensate shown in Chemical Formula 1 in the negative electrode activation substance.

A configuration of the electrode plate groups created in the present embodiment is of the following seven types.

### [Type 1]

Positive electrode plate: Positive electrode plates, whose activation substance utilization rate relating to the discharge reaction has been varied from 48% to 68% in six steps, were readied.
Negative electrode plate: Negative electrode plates B, in which 0.2 mass parts of carbon black made from heavy oil with a specific surface area of 260 m²/g were added to 100 mass parts of the activation substance, and in which the condensate shown in Chemical Formula 1 was used as the organic compound for inhibiting coarsening of the negative electrode activation substance, were used. Here, 100 mass parts of the activation substance refer to 100 mass parts of the activation substance in a fully charged state (sponge-like metallic lead). The same applies hereafter.
Separator: The polyethylene separator P was used.

### [Type 2]

Positive electrode plate: Positive electrode plates, whose activation substance utilization rate relating to the discharge reaction has been varied from 48% to 68% in six steps, were readied.
Negative electrode plate: Negative electrode plates B, in which 0.2 mass parts of the carbon black described above were added to 100 mass parts of the activation substance, and in which the condensate shown in Chemical Formula 1 was used as the organic compound for inhibiting coarsening of the negative electrode activation substance, were used.
Separator: The separator Q, in which a polyethylene separator and a nonwoven fabric formed from glass fiber are overlapped with each other, were used.

### [Type 3]

Positive electrode plate: Positive electrode plates, whose activation substance utilization rate relating to the discharge reaction has been varied from 48% to 68% in six steps, were readied.
Negative electrode plate: Negative electrode plates A, in which 0.2 mass parts of the carbon black described above were added to 100 mass parts of the activation substance, and in which the sodium ligninsulfonate shown in Chemical Formula 2 was used as the organic compound for inhibiting coarsening of the negative electrode activation substance, were used.
Separator: The polyethylene separator P was used.

### [Type 4]

Positive electrode plate: Positive electrode plates, whose activation substance utilization rate relating to the discharge reaction has been varied from 48% to 68% in six steps, were readied.
Negative electrode plate: Negative electrode plates A, in which 0.2 mass parts of the carbon black described above were added to 100 mass parts of the activation substance, and in which the sodium ligninsulfonate shown in Chemical Formula 2 was used as the organic compound for inhibiting coarsening of the negative electrode activation substance, were used.
Separator: The separator Q, in which a polyethylene separator and a nonwoven fabric formed from glass fiber are overlapped with each other, were used.

### [Type 5]

Positive electrode plate: Positive electrode plates, whose activation substance utilization rate relating to the discharge reaction has been varied from 48% to 68% in six steps, were readied.
Negative electrode plate: Negative electrode plates C, in which 2 mass parts of natural flake graphite were added to 100 mass parts of the activation substance, and in which the condensate shown in Chemical Formula 1 was used as the organic compound for inhibiting coarsening of the negative electrode activation substance, were used.
Separator: The polyethylene separator P was used.

### [Type 6]

Positive electrode plate: Positive electrode plates, whose activation substance utilization rate relating to the discharge reaction has been varied from 48% to 68% in six steps, were readied.
Negative electrode plate: Negative electrode plates C, in which 2 mass parts of natural flake graphite were added to 100 mass parts of the activation substance, and in which the condensate shown in Chemical Formula 1 was used as the organic compound for inhibiting coarsening of the negative electrode activation substance, were used.
Separator: The separator Q, in which a polyethylene separator and a nonwoven fabric formed from glass fiber are overlapped with each other, were used.

### [Type 7]

Positive electrode plate: Positive electrode plates, whose activation substance utilization rate relating to the discharge reaction has been varied from 48% to 68% in six steps, were readied.
Negative electrode plate: Negative electrode plates B', to which no carbonaceous electroconductive materials have been added, and in which the condensate shown in Chemical Formula 1 was used as the organic compound for inhibiting coarsening of the negative electrode activation substance, were used.
Separator: The separator Q, in which a polyethylene separator and a nonwoven fabric formed from glass fiber are overlapped with each other, were used.

In the present embodiment, the measurement of the positive electrode activation substance utilization rate relating to the discharge reaction was performed using the method described above. Specifically, a lead acid storage battery is configured, wherein an electrode plate group comprising one positive electrode plate and two negative electrode plates, in which negative electrode plate is arranged on each of both sides of a positive electrode plate with a separator interposed between the positive electrode plate and the negative electrode plates (with the theoretical capacity of the negative electrode activation substance being equal to or greater than 1.5 times the theoretical capacity of the positive electrode activation substance), is accommodated in a battery jar; and an electrolyte (dilute sulfuric acid with a specific weight of 1.28) having a theoretical capacity volume equal to or greater than 1.5 times the theoretical capacity of the positive electrode activation substance is poured into the battery jar. A positive electrode-governed discharge experiment was then performed. In this experiment, the lead acid storage battery is discharged at a current of 0.2 C in relation to the rated capacity, and the discharge terminates when the positive electrode activation substance is depleted and a state is reached in which the discharge reaction is no longer possible before the negative electrode activation substance is depleted. In this discharge experiment, the positive electrode activation substance utilization rate is defined as a ratio between the quantity of electricity discharged until the discharge is terminated and a theoretical discharge capacity of the positive electrode activation substance of the positive electrode plate.

Measurement of the charge acceptance and measurement of cycling performance were performed on the lead-acid batteries assembled using the electrode plate groups of types 1 through 7. First, measurement of the charge acceptance was performed as follows. The initial SOC (state of charge) of an assembled lead acid storage battery was calibrated in a constant-temperature bath of 25°C, to 90% of a fully charged state; and the charging current five seconds after application of a 14-V charging voltage ("charging current after five seconds;" the current before [a voltage of] 14 V is reached being restricted to 100 A) was measured as a charging current that indicates the initial-stage charge acceptance. A higher charging current after five seconds indicates a higher initial charge acceptance. Next, a cycle experiment, in which 5000 charge/discharge cycles were repeated, was performed. In each of the cycles, the battery was charged for ten minutes in a 40°C constant-temperature bath using a charging voltage of 14.8 V (with the current before [the voltage reaches] 14.8 V restricted to 25 A), then made to undergo a constant-current discharge for four minutes at a constant discharge current of 25 A. Then, the charge acceptance was measured using conditions similar to those used during the measurement of the initial charge acceptance. A higher charging current after five seconds after 5000 cycles indicates that the initial high charge acceptance has subsequently been [better] maintained.

Measurement of cycling performance (i.e., lifespan experiment) was performed as follows. The ambient temperature was adjusted so that the battery temperature is at 25°C. A lifespan experiment was performed in which in one charge/discharge cycle, a constant current discharge was performed at 45 A for 59 seconds and 300 A for 1 second, then a constant current/constant voltage charge was performed at 100 A and 14 V for 60 seconds. This experiment is a cycle experiment that simulates use of the lead acid storage battery in an ISS vehicle. In this lifespan experiment, since the charge quantity is less than the discharge quantity, if charging is incomplete, [the battery] gradually becomes insufficiently charged. As a result, a voltage after one second, which is [the voltage] after a discharge has been performed for one second at a discharge current of 300 A, gradually decreases. Specifically, when the negative electrode undergoes polarization during the constant current/constant voltage charge, and the constant current/constant voltage charge switches to a constant voltage charge at an early stage, the charging current decays, and [the battery] becomes insufficiently charged. In this lifespan experiment, a lifespan of the battery was determined to be when the voltage after one second during a 300-A discharge falls below 7.2 V.

Unless a high charge acceptance is maintained even during charge/discharge cycling, the state of insufficient charge is maintained, and cycling performance deteriorates. Evaluating the above-mentioned change in the charging current after five seconds of charge/discharge cycling, and the cycling performance, makes it possible to appropriately evaluate the state of charge acceptance during charge/discharge cycling.

The above experiments make it possible to evaluate the charge acceptance during constant-voltage charging and durability when used under PSOC.

Results of the measurement of the charging current after five seconds and the measurement of the cycling performance, performed on the lead-acid batteries of types 1 through 7, having an electrode plate group configuration of types 1 though 7, are shown in Tables 2 through 8. In Tables 2 and 4, [a result for] an instance in which the utilization rate of the positive electrode activation substance in relation to the discharge reaction is 48% is listed as a conventional example. In Tables 3 and 5 through 7, [a result for] an instance in which the utilization rate of the positive electrode activation substance in relation to the discharge reaction is 48% is listed as a comparative example. In Tables 5 through 7, [a result for] an instance in which the utilization rate of the positive electrode activation substance in relation to the discharge reaction is 68% is listed as a reference example. Also, in Table 8, which shows examples in which no carbonaceous electroconductive material is added to the negative electrode activation substance, all examples in which the utilization rate of the positive electrode activation substance is 48% through 68% are listed as reference examples. For the charging current after five seconds and the cycling performance listed in each of the tables, the evaluation was performed using 100 for the conventional example shown in Table 4 (for the charging current after five seconds, using 100 as the initial value).

**[Table 2]**

| No. | Positive electrode utilization rate | Negative electrode type | Separator type | Charging current after 5 seconds | | Cycling performance | Note |
|---|---|---|---|---|---|---|---|
| | | | | Initial | After 5000 cycles | | |
| 1 | 48% | B | P | 159 | 94 | 189 | Conventional example |
| 2 | 50% | | | 171 | 102 | 194 | Embodiment |
| 3 | 55% | | | 179 | 106 | 199 | |
| 4 | 60% | | | 191 | 111 | 202 | |
| 5 | 65% | | | 197 | 112 | 204 | |
| 6 | 68% | | | 204 | 110 | 197 | Reference example |

From the above results, it can be seen that using a compound whose principal component is the condensate shown in Chemical Formula 1 as the organic compound for inhibiting coarsening of the negative electrode activation substance makes it possible to dramatically increase the charging current after five seconds (i.e., the charge acceptance) and the cycling performance (i.e., lifespan performance under PSOC), even in an instance in which the utilization rate of the positive electrode activation substance in relation to the discharge reaction is 48%. Also, increasing the utilization rate of the positive electrode activation substance to 50% or above makes it possible to clearly improve the charging current after five seconds and the cycling performance compared to an instance in which the utilization rate is 48%. The charging current after five seconds and the cycling performance begin to plateau with increasing utilization rate of the positive electrode activation substance, and the cycling performance decreases when the utilization rate of the positive electrode activation substance reaches 68%, as compared to an instance in which the utilization rate of the positive electrode activation substance is 65%.

**[Table 3]**

| No. | Positive electrode utilization rate | Negative electrode type | Separator type | Charging current after 5 seconds | | Cycling performance | Note |
|---|---|---|---|---|---|---|---|
| | | | | Initial | After 5000 cycles | | |
| 1 | 48% | | | 154 | 114 | 289 | Comparative example |
| 2 | 50% | B | Q | 164 | 119 | 294 | Embodiment |
| 3 | 55% | | | 174 | 125 | 299 | |
| 4 | 60% | | | 187 | 130 | 303 | |
| 5 | 65% | | | 192 | 139 | 306 | |
| 6 | 68% | | | 199 | 132 | 297 | Reference example |

From the above results, it can again be seen that using a compound whose principal component is the condensate shown in Chemical Formula 1 is used as the organic compound for inhibiting coarsening of the negative electrode activation substance makes it possible to dramatically increase the charging current after five seconds (i.e., the charge acceptance) and the cycling performance (i.e., lifespan performance under PSOC). It can also be seen from the above results that using the separator Q, in which a nonwoven fabric is used for a portion that is disposed opposite the negative electrode plate, as a separator makes it possible to dramatically increase the cycling performance compared to an instance in which the polyethylene separator P is used. Also, a utilization rate of the positive electrode activation substance of 50% or above makes it possible to clearly improve the charging current after five seconds and the cycling performance compared to an instance in which the utilization rate is 48%. Again, in this instance, the charging current after five seconds and the cycling performance begin to plateau with increasing utilization rate of the positive electrode activation substance, and the cycling performance decreases when the utilization rate of the positive electrode activation substance reaches 68% compared to an instance in which the utilization rate of the positive electrode activation substance is 65%. It can also be seen from the above results that in an instance in which a condensate shown in Chemical Formula 1 is used as the organic compound for inhibiting coarsening of the negative electrode activation substance, and the separator Q, in which a nonwoven fabric is used for the portion that is disposed opposite the negative electrode plate, is used as the separator, setting the utilization rate of the positive electrode activation substance in relation to the discharge reaction to a range of 55% or above and 65% or below makes it possible to increase the charging current after five seconds to approximately twice that of the conventional example, and increase the cycling performance to approximately three times that of the conventional example.

**[Table 4]**

| No. | Positive electrode utilization rate | Negative electrode type | Separator type | Charging current after 5 seconds | | Cycling performance | Note |
|---|---|---|---|---|---|---|---|
| | | | | Initial | After 5000 cycles | | |
| 1 | 48% | | | 100 | 50 | 100 | Conventional example |
| 2 | 50% | A | P | 102 | 51 | 110 | Embodiment |
| 3 | 55% | | | 102 | 52 | 114 | |
| 4 | 60% | | | 103 | 52 | 114 | |
| 5 | 65% | | | 103 | 53 | 114 | |
| 6 | 68% | | | 103 | 53 | 114 | Reference example |

It can be seen from the above results that in an instance in which a compound whose principal component is sodium ligninsulfonate shown in Chemical Formula 2 as the organic compound for inhibiting coarsening of the negative electrode activation substance, setting the utilization rate of the positive electrode activation substance to 50% or above again improves the charging current after five seconds and the cycling performance compared to an instance in which the utilization rate is set to 48%. Again, in this instance, the charging current after five seconds and the cycling performance plateau with increasing utilization rate of the positive electrode activation substance.

**[Table 5]**

| No. | Positive electrode utilization rate | Neg ative electrode type | Separator type | Charging current after 5 seconds | | Cycling performance | Note |
|---|---|---|---|---|---|---|---|
| | | | | Initial | After 5000 cycles | | |
| 1 | 48% | A | Q | 95 | 60 | 130 | Comparative example |
| 2 | 50% | | | 97 | 62 | 140 | Embodiment |
| 3 | 55% | | | 98 | 63 | 144 | |
| 4 | 60% | | | 99 | 65 | 144 | |
| 5 | 65% | | | 99 | 65 | 144 | |
| 6 | 68% | | | 99 | 65 | 144 | Reference example |

It can be seen from the above results that in an instance in which a compound whose principal component is sodium ligninsulfonate shown in Chemical Formula 2 as the organic compound for inhibiting coarsening of the negative electrode activation substance, using the separator Q, in which a nonwoven fabric is used for the portion that is disposed opposite the negative electrode plate, again makes it possible to dramatically increase cycling performance compared to an instance shown in Table 4 in which the polyethylene separator P is used. Again, in this instance, setting the utilization rate of the positive electrode activation substance to 50% or above makes it possible to improve the charging current after five seconds and the cycling performance compared to an instance in which the utilization rate is 48%, although the charging current after five seconds and the cycling performance plateau with increasing utilization rate of the positive electrode activation substance.

**[Table 6]**

| No. | Positive electrode utilization rate | Negative electrode type | Separator type | Charging current after 5 seconds | | Cycling performance | Note |
|---|---|---|---|---|---|---|---|
| | | | | Initial | After 5000 cycles | | |
| 1 | 48% | C | P | 160 | 98 | 229 | Comparative exampl e |
| 2 | 50% | | | 170 | 104 | 243 | Embodiment |
| 3 | 55% | | | 180 | 115 | 252 | |
| 4 | 60% | | | 189 | 124 | 267 | |
| 5 | 65% | | | 203 | 126 | 271 | |
| 6 | 68% | | | 206 | 123 | 250 | Reference example |

Comparing Table 6 with Table 2 makes it possible to see an effect of the carbonaceous electroconductive material added to the negative electrode. Table 6 shows results in which 2 mass parts of flake graphite was added under a condition in which a compound whose principal component is the condensate shown in Chemical Formula 1 was used as the organic compound for inhibiting coarsening of the negative electrode activation substance. Table 2 shows results in which 0.2 mass parts of carbon black were added under a condition in which a compound whose principal component is the condensate shown in Chemical Formula 1 was used as the organic compound for inhibiting coarsening of the negative electrode activation substance.

Flake graphite has a characteristic in which the activation substance paste does not undergo a physical change (i.e., the paste does not harden) even when the amount added is increased. Therefore, the amount added to the negative electrode activation substance can be increased.

It can be seen from the above results that in an instance in which 2 mass parts of flake graphite was added, there is no significant difference in the initial charging current after five seconds compared to an instance in which 0.2 mass parts of carbon black were added. However, it can be seen that the charging current after five seconds after 5000 cycles and the cycling performance can be further dramatically improved compared to an instance in which 0.2 mass parts of carbon black were added.

Adding 2 mass parts of flake graphite is thought to improve the charge acceptance and the cycling performance compared to an instance in which 0.2 mass parts of carbon black is added as a result of the resistance of the carbonaceous electroconductive material being lower in flake graphite than in carbon black, it also being possible to add flake graphite by a greater amount than carbon black, therefore further improving the charge acceptance.

Again, in this instance, setting the utilization rate of the positive electrode activation substance to 50% or above makes it possible to clearly improve the charging current after five seconds and the cycling performance compared to an instance in which the utilization rate is 48%, although the charging current after five seconds and the cycling performance plateau with increasing utilization rate of the positive electrode activation substance, and the cycling performance decreases when the utilization rate of the positive electrode activation substance reaches 68% compared to an instance in which the utilization rate of the positive electrode activation substance is 65%.

**[Table 7]**

| No . | Positive electrode utilization rate | Negative electrode type | Separator type | Charging current after 5 seconds | | Cycling performance | Note |
|---|---|---|---|---|---|---|---|
| | | | | Initial | After 5000 cycles | | |
| 1 | 48% | C | Q | 155 | 115 | 291 | Comparative example |
| 2 | 50% | | | 165 | 124 | 305 | |
| 3 | 55% | | | 175 | 135 | 313 | Embodiment |
| 4 | 60% | | | 184 | 144 | 327 | |
| 5 | 65% | | | 198 | 154 | 331 | |
| 6 | 68% | | | 201 | 154 | 318 | Reference example |

From the above results, it can again be seen by comparing Tables 7 and 3 that in an instance in which 2 mass parts of flake graphite are added as the carbonaceous electroconductive material to be added to the negative electrode, although there is no significant difference in the initial charging current after five seconds, there is a further drastic improvement in the charging current after five seconds after 5000 cycles and the cycling performance compared to an instance in which 0.2 mass parts of carbon black are added.

It can also be seen from Tables 6 and 7 that using the separator Q, in which a nonwoven fabric is used for the portion that is disposed opposite the negative electrode plate, makes it possible to dramatically improve the cycling performance compared to an instance in which the polyethylene separator P is used. Again, in this instance, setting the utilization rate of the positive electrode activation substance to 50% or above makes it possible to clearly improve the charging current after five seconds and the cycling performance compared to an instance in which the utilization rate is 48%, although the charging current after five seconds and the cycling performance plateau with increasing utilization rate of the positive electrode activation substance, and the lifespan performance decreases when the utilization rate of the positive electrode activation substance reaches 68% compared to an instance in which the utilization rate of the positive electrode activation substance is 65%.

**[Table 8]**

| No. | Positive electrode utilization rate | Negative electrode type | Separator type | Charging current after 5 seconds | | Cycling performance | Note |
|---|---|---|---|---|---|---|---|
| | | | | Initial | After 5000 cycles | | |
| 1 | 48% | B' No carbonaceo us electroconductive material added | | 126 | 52 | 119 | Embodiment |
| 2 | 50% | | | 136 | 55 | 124 | |
| 3 | 55% | | Q | 146 | 56 | 127 | |
| 4 | 60% | | | 155 | 58 | 127 | |
| 5 | 65% | | | 169 | 58 | 126 | |
| 6 | 68% | | | 172 | 58 | 124 | |

From the above results, it can be seen that using a compound whose principal component is the condensate shown in Chemical Formula 1 as the organic compound for inhibiting coarsening of the negative electrode activation substance makes it possible to greatly improve, in the initial stage, the charging current after five seconds and the cycling performance compared to conventional examples, even in an instance in which the carbonaceous electroconductive material is not added to the negative electrode activation substance. Again, in this instance, setting the utilization rate of the positive electrode activation substance to 50% or above makes it possible to improve the charging current after five seconds and the cycling performance compared to an instance in which the utilization rate is 48%, although the charging current after five seconds and the cycling performance plateau with increasing utilization rate of the positive electrode activation substance.

Table 5 shows an example in which the carbonaceous electroconductive material is not added as a reference example. There is no significant difference in the charging current after five seconds in the initial stage compared to Tables 3 and 7. However, in the reference example in Table 5, the carbonaceous electroconductive material, which has an action of finely dispersing lead sulfate produced in the negative electrode activation substance during discharge, is not added to the negative electrode activation substance. Therefore, the cycling performance is drastically worse compared to the instances shown in Tables 3 and 7. Specifically, although the charge acceptance in the initial stage is high, a state of high charge acceptance cannot be maintained throughout charge/discharge cycling, and the charge acceptance falls as charge/discharge cycling proceeds. If the carbonaceous electroconductive material is not added, it is not possible to improve the cycling performance, even if the activation substance utilization rate of the positive electrode plate is adequately adjusted.

From the results shown in Tables 2 through 7, it can be seen that setting the utilization rate of the positive electrode activation substance in relation to the discharge reaction to 50% or above makes it possible to improve, to various extents, the charging current after five seconds compared to an instance in which the utilization rate of the positive electrode activation substance is set to 48%.

The following can be seen from a comparison between Tables 2, 4, and 6 and between Tables 3, 5, and 7, which show results of evaluations regarding lead-acid batteries having electrode plate group configurations in which the same separator has been used. Specifically, it can be seen that in an instance in which the negative electrode plate B and the negative electrode plate C, in which a compound whose principal component is the condensate shown in Chemical Formula 1 was selected as the organic compound for inhibiting coarsening of the negative electrode activation substance, the charge acceptance has dramatically improved compared to the conventional example, even when the utilization rate of the positive electrode activation substance in relation to the discharge reaction has been set to 48%. It has also been shown that in an instance in which the negative electrode type A, in which a compound whose principal component is the sodium ligninsulfonate shown in Chemical Formula 2 was selected as the organic compound for inhibiting coarsening of the negative electrode activation substance, was used, the charge acceptance cannot be dramatically improved even when the utilization rate of the positive electrode activation substance is increased. In contrast, in an instance in which the negative electrode types B and C, in which a compound whose principal component is the condensate shown in Chemical Formula 1 was selected as the organic compound for inhibiting coarsening of the negative electrode activation substance, was used, increasing the utilization rate of the positive electrode activation substance dramatically increase the charge acceptance so that the charge acceptance reaches a maximum of approximately double that in an instance in which the utilization rate of the positive electrode activation substance is set to 48%.

From a comparison between Tables 2, 4, and 6, and between Tables 3, 5, and 7, it has been shown that the cycling performance dramatically improves in an instance in which the positive electrode plate B is used and in an instance in which the positive electrode plate C is used. This indicates that, as with the results of the measurement of the charge acceptance described above, the charge acceptance of the negative electrode has a significant effect on the charge acceptance of the entire battery. In particular, according to the results shown in Tables 3, 5, and 7, in which the separator Q was used, the cycling performance reached approximately three times that of the conventional example.

Meanwhile, it was shown that the number of cycles tends to decrease as the utilization rate of the positive electrode activation substance increases, and that the lifespan become shorter when the utilization rate of the positive electrode activation substance exceeds 65%. This is due to an occurrence of a phenomenon known as sludging in which an excessively high activation substance porosity results in a destruction of the structure of the activation substance by repeated charging/discharging. Therefore, the utilization rate of the positive electrode activation substance in relation to the discharge reaction is thought to be most preferably within a range of 50% to 65%. Therefore, using each of the lead-acid batteries shown in Tables 2, 4, and 6, a cycle experiment was performed wherein in each cycle, the battery was charged for one hour with a 0.2-C current, then discharged for 1.25 hours with a 0.2-C current. This cycle experiment is a heavy load lifespan experiment, in which the lifespan mode is one in which the lifespan of the battery is reached when the battery is no longer capable of discharging due to sludging of the activation substance of the positive electrode plate, rather than due to sulfation or coarsening of the negative electrode activation substance. In this experiment, the lifespan was deemed to have been reached when the voltage after one of discharge fell below 10.2 V. Results of this cycle lifespan experiment are shown in Table 9. The cycle results shown in Table 9 are the number of cycles where 100 represents the lifespan in an instance in which the positive electrode plate having a utilization rate of 48% was used. The results of the experiment were similar whether the negative electrode plates A, B, or C was used.

**[Table 9]**

| No. | Positive electrode utilization rate | Cycling result |
|---|---|---|
| 1 | 48% | 100 |
| 2 | 50% | 100 |
| 3 | 55% | 99 |
| 4 | 60% | 97 |
| 5 | 65% | 95 |
| 6 | 68% | 80 |

As shown in Table 9, the cycle results dramatically dropped when the positive electrode utilization rate exceeded 65%. Taking this into account together with the results in Tables 2 through 7, considerations related to heavy load usage suggest that the utilization rate of the positive electrode activation substance is preferably within a range of 50% to 65%. In the cycling performance shown in Tables 2 through 7, the lifespan mode is one in which the lifespan is reached primarily due to sulfation or coarsening of the negative electrode activation substance in instances where the activation substance utilization rate is lower; and a gradual transition takes place, with increasing activation substance utilization rate, to a lifespan mode in which the lifespan is reached when the battery is no longer capable of discharging due to sludging of the positive electrode activation substance.

However, even when the utilization rate of the positive electrode activation substance exceeds 65%, an effect of synergy with the improvement in the charge acceptance of the negative electrode plate increases the number of cycles to approximately three times that of the conventional example. Thus, it was shown that using a negative electrode plate whose charge acceptance has been improved, and increasing the utilization rate of the activation substance in the positive electrode plate in relation to the charging reaction, make it possible to improve the charge acceptance and the lifespan performance of the battery. It was shown that whether the condensate shown in Chemical Formula 1 or a compound whose principal component is the sodium ligninsulfonate shown in Chemical Formula 2 is used as the organic compound for inhibiting coarsening of the negative electrode activation substance, changing the separator to the separator Q, in which a nonwoven fabric is used for the portion that is disposed opposite the negative electrode plate, dramatically improves the cycling performance.

For the organic compound for inhibiting coarsening of the negative electrode activation substance, a condensate having a basic structural unit in which a p-aminobenzenesulfonic acid group is bonded to a benzene nucleus of a bisphenol is particularly effective. However, an equivalent effect can also be obtained using a condensate in which a sulfonic acid group is bonded to a benzene nucleus of a bisphenol.

Next, an experiment in which the average primary particle diameter of the flake graphite is changed and the effect of the average primary particle diameter on battery characteristics is examined was performed on each of the types of lead acid storage battery listed as No. 4 in Table 6 and No. 4 in Table 7 respectively. In the experiment, the average primary particle diameter of flake graphite was changed between 80 µm, 100 µm, 120 µm, 140 µm, 180 µm, and 220 µm. Other conditions were set to be identical to each of the types of lead acid storage battery listed as No. 4 in Table 6 and No. 4 in Table 7 respectively. Results of evaluation of the charging current after five seconds and the cycling performance are shown in Tables 10 and 11. As with Tables 2 through 8, for the charging current after five seconds and the cycling performance, the evaluation was performed using 100 for the conventional example shown in Table 4 (for the charging current after five seconds, using 100 as the initial value).

**[Table 10]**

| No. | Positive electrode utilization rate | Negative electrode type | Separator type | Average primary particle diameter of graphite (µm) | Charging current after 5 seconds | | Cycling performance | Note |
|---|---|---|---|---|---|---|---|---|
| | | | | | Initial | After 5000 cycles | | |
| 1 | | | | 80 | 158 | 57 | 121 | Embodiment |
| 2 | | | | 100 | 169 | 79 | 194 | |
| 3 | 60% | C | P | 120 | 174 | 90 | 212 | |
| 4 | | | | 140 | 179 | 102 | 230 | |
| 5 | | | | 180 | 189 | 124 | 267 | |
| 6 | | | | 220 | 189 | 124 | 267 | |

**[Table 11]**

| No. | Positive electrode utilization rate | Negative electrode type | Separator type | Average primary particle diameter of graphite (µm) | Charging current after 5 seconds | | Cycling performance | Note |
|---|---|---|---|---|---|---|---|---|
| | | | | | Initial | After 5000 cycles | | |
| 1 | | | | 80 | 156 | 74 | 181 | Embodiment |
| 2 | | | | 100 | 164 | 99 | 254 | |
| 3 | 60% | C | Q | 120 | 169 | 110 | 272 | |
| 4 | | | | 140 | 174 | 122 | 291 | |
| 5 | | | | 180 | 184 | 144 | 327 | |
| 6 | | | | 220 | 184 | 144 | 327 | |

From the results shown in Tables 10 and 11, it can be seen that in instances in which either separators are used, the charging current after five seconds in the initial stage increases and the cycling performance improves with increasing average primary particle size of the flake graphite. This trend is prominent when the average primary particle diameter of flake graphite is in a range of 100 µm or above, and the effect is less pronounced at 80 µm. This is because the electrical resistance at an interface with graphite increases as the average primary particle diameter decreases; and because the electrical resistance decreases and the cycle lifespan improves as the average primary particle diameter of graphite increases. As with the results described above, it can again be seen in this instance that using the separator Q, in which a nonwoven fabric is used for the portion that is disposed opposite the negative electrode plate, as the separator makes it possible to dramatically improve the cycling performance compared to an instance in which the polyethylene separator P is used.

From these results, it can be seen that the average primary particle diameter of flake graphite is preferably within a range of 100 µm or above. An optimum value for the average primary particle diameter of flake graphite is 180 µm. Flake graphite is generally made by refining natural graphite, and manufacture of flake graphite having a particle diameter in excess of 220 µm is low in yield and difficult to obtain an amount for industrial use.

With conventional lead-acid batteries, improving the charge acceptance has been accompanied by a greater focus solely on improving the charge acceptance and the lifespan performance of the negative electrode plate. A concept of improving the performance of the positive electrode plate to improve the charge acceptance of the lead acid storage battery has not existed. Therefore, conventionally, the charge acceptance of the entire lead acid storage battery has been determined by the charge acceptance of the negative electrode, and there has been a limit in terms of improving the charge acceptance of the lead acid storage battery. In the present invention, a focus is placed on the performance of the positive electrode activation substance in order to overcome this limitation, and the performance of the positive electrode activation substance is improved, thereby making it possible to further improve the charge acceptance of the entire battery compared to a conventional lead acid storage battery.

Conventionally, the charge acceptance of lead-acid batteries has been improved by improving the characteristics of the negative electrode plate only. However, in the present invention, the utilization rate of the positive electrode activation substance in relation to the discharge reaction is improved so as to improve the charge acceptance of the positive electrode plate, thereby making it possible to further improve the charge acceptance of the entire battery compared to a conventional lead acid storage battery, and to perform a higher-rate discharge under PSOC. Also, according to the present invention, it is possible to improve the charge acceptance of the lead acid storage battery, thereby making it possible to prevent charging/discharging from being repeatedly performed in an insufficiently charged state. It is thereby possible to prevent lead sulfate, which is a discharge product, from coarsening due to repeated charging/discharging in an insufficiently charged state, and to improve the lifespan performance of the lead acid storage battery under PSOC. This represents a significant advancement for a lead acid storage battery used under PSOC, and a significant contribution towards improving the performance of a lead acid storage battery to be installed in a micro-hybrid vehicle or a similar vehicle.

### INDUSTRIAL APPLICABILITY

The present invention thus makes it possible to provide a liquid-type lead acid storage battery whose charge acceptance and the lifespan performance has been improved compared to a conventional lead acid storage battery, and contributes towards increasing the use of ISS vehicles, electrical power generation control vehicles, and other micro-hybrid vehicles. Therefore, the present invention is useful for resolving global-scale challenges of improving fuel efficiency of motor vehicles to reduce carbon dioxide emissions and inhibit global warming, and has significant industrial applicability.

## Claims

1. A liquid-type lead acid storage battery wherein an electrode plate group is accommodated together with an electrolyte in a battery jar; the electrode plate group being formed by layering a negative electrode plate comprising a negative electrode current collector filled with a negative electrode activation substance, and a positive electrode plate comprising a positive electrode current collector filled with a positive electrode activation substance, with a separator interposed therebetween; and wherein charging is performed intermittently and high-rate discharge to load is performed in a partially charged state;
the lead acid storage battery **characterized in that**
at least a carbonaceous electroconductive material and an organic compound for inhibiting coarsening of the negative electrode activation substance due to charging/discharging are added to the negative electrode activation substance; and
a utilization rate of the activation substance in the positive electrode plate in relation to a discharge reaction is set to a range of 50% or above and 65% or below.

2. The lead acid storage battery according to Claim 1, wherein the organic compound for inhibiting coarsening of the negative electrode activation substance due to charging/discharging is an organic compound whose principal component is a bisphenol/aminobenzenesulfonic acid/formaldehyde condensate.

3. The lead acid storage battery according to Claim 1, wherein the organic compound for inhibiting coarsening of the negative electrode activation substance due to charging/discharging is a formaldehyde condensate of bisphenol A/aminobenzenesulfonic acid sodium salt represented by a chemical formula shown below in Chemical Formula 1.

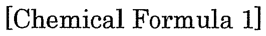

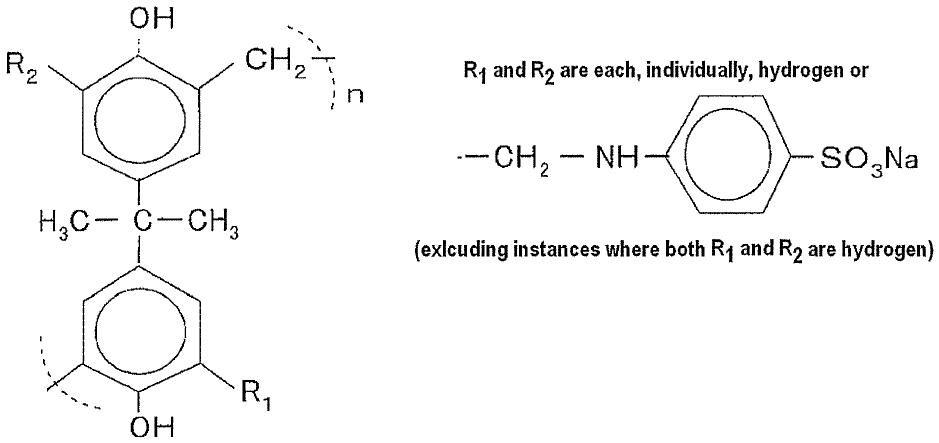

4. The lead acid storage battery according to Claim 2 or 3, wherein the carbonaceous electroconductive material is at least one [material] selected from a group of materials consisting of graphite, carbon black, activated carbon, carbon fiber, or carbon nanotubes.

5. The lead acid storage battery according to Claim 4, wherein the carbonaceous electroconductive material is flake graphite.

6. The lead acid storage battery according to Claim 5, wherein the average primary particle diameter of flake graphite is 100 µm or more.

7. The lead acid storage battery according to Claim 2, 3, 4, 5, or 6, wherein a surface of the separator disposed opposite a surface of the negative electrode plate comprises a nonwoven fabric formed from a fiber made of at least one material selected from a group of materials consisting of glass, pulp, and polyolefin.

8. The lead acid storage battery according to Claim 7, wherein the activation substance utilization rate of the positive electrode plate is set within a range of 55% or above and 65% or below.
